(19) Europäisches Patentamt
European Patent Office
Office européen des brevets

(11) Veröffentlichungsnummer : **0 391 168 B1**

(12) # EUROPÄISCHE PATENTSCHRIFT

(45) Veröffentlichungstag der Patentschrift :
**20.05.92 Patentblatt 92/21**

(51) Int. Cl.$^5$ : **A01N 25/22,** A01N 43/653

(21) Anmeldenummer : **90105510.3**

(22) Anmeldetag : **23.03.90**

(54) **Verwendung von N-Alkyl-lactamen als Kristallisationsinhibitoren.**

(30) Priorität : **05.04.89 DE 3910921**

(43) Veröffentlichungstag der Anmeldung :
**10.10.90 Patentblatt 90/41**

(45) Bekanntmachung des Hinweises auf die Patenterteilung :
**20.05.92 Patentblatt 92/21**

(84) Benannte Vertragsstaaten :
**AT BE CH DE DK ES FR GB IT LI NL SE**

(56) Entgegenhaltungen :
**EP-A- 0 040 345**
**EP-B- 0 077 078**
**DE-A- 2 324 010**
**DE-A- 3 308 850**
**DE-B- 1 160 268**
**US-A- 4 348 385**

(73) Patentinhaber : **BAYER AG**
**W-5090 Leverkusen 1 Bayerwerk (DE)**

(72) Erfinder : **Reizlein, Karl, Dr.**
**Morgengraben 6**
**W-5000 Koeln 80 (DE)**
Erfinder : **Engelhardt, Ulrich**
**Elisenstrasse 25**
**W-5090 Leverkusen (DE)**
Erfinder : **Horstmann, Heinz-Otto, Dr.**
**Loehe 42**
**W-5060 Bergisch-Gladbach 2 (DE)**
Erfinder : **Singer, Rolf-Jürgen, Dr.**
**Tersteegenweg 18**
**W-5600 Wuppertal 1 (DE)**
Erfinder : **Wangermann, Klaus, Dr.**
**Bethelstrasse 50**
**W-4150 Krefeld (DE)**
Erfinder : **Wirth, Wolfgang, Dr.**
**Hanftalstrasse 34**
**W-5202 Hennef 1 (DE)**

EP 0 391 168 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft die neue Verwendung von N-Alkyl-lactamen zur Verhinderung der Kristallisation beim Ausbringen von wäßrigen Spritzbrühen auf Basis bestimmter fungizider Wirkstoffe.

In Spritzgeräten, die üblicherweise zur Ausbringung wäßriger Formulierungen von Pflanzenbehandlungsmitteln verwendet werden, sind mehrere Filter sowie Düsen vorhanden. So befinden sich zum Beispiel Saugfilter zwischen Ansaugteil und Tankpumpe und ferner Druckfilter, welche nach der Pumpe im Druckbereich angeordnet sind. Außerdem können auch Düsenfilter enthalten sein, die sich direkt vor den Spritzdüsen befinden. Alle diese Filter sowie auch die Düsen können bei der Ausbringung von wäßrigen Spritzbrühen auf Basis fester Wirkstoffe mehr oder weniger leicht durch auskristallisierenden Wirkstoff verstopfen.

Es ist bereits bekannt geworden, daß 1-(4-Chlorphenyl)-4,4-dimethyl-3-(1,2,4-triazol-1-yl-methyl)-pentan-3-ol und 1-(4-Chlorphenoxy)-3,3-dimethyl-1-(1,2,4-triazol-1-yl)-butan-2-ol fungizid wirksam sind und in Form von wäßrigen Spritzbrühen auf Pflanzen und/oder deren Lebensraum appliziert werden können (vgl. EP-OS 0 040 345 und DE-PS 2 324 010). Zur Herstellung derartiger Spritzbrühen lassen sich oberflächenaktive Stoffe, wie zum Beispiel Alkylarylpolyglykolether, einsetzen. Nachteilig bei der Verwendung dieser herkömmlichen Formulierungen ist aber, daß die Wirkstoffe zur Kristallisation neigen und sowohl Filter als auch Düsen der Spritzgeräte verstopfen können.

Es wurde nun gefunden, daß sich N-Alkyl-lactame der Formel

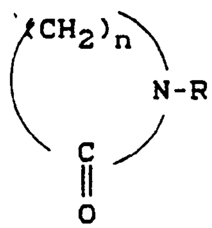

(I)

in welcher
R für Alkyl mit 8 bis 18 Kohlenstoffatomen steht und
n für die Zahlen 3, 4 oder 5 steht,
bei Ausbringen von wäßrigen Spritzbrühen die

A) 1-(4-Chlorphenyl)-4,4-dimethyl-3-(1,2,4-triazol-1-yl-methyl)-pentan-3-ol der Formel

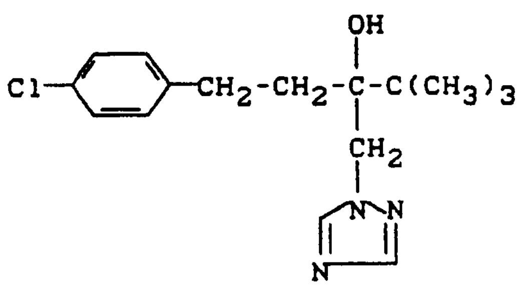

(II)

und/oder

1-(4-Chlorphenoxy)-3,3-dimethyl-1-(1,2,4-triazol-1-yl)-butan-2-ol der Formel

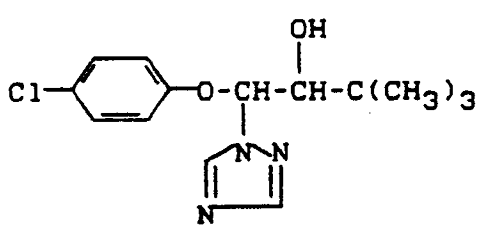

(III)

und

B) gegebenenfalls einen oder mehere weitere Wirkstoffe sowie Zusatzstoffe

enthalten, zur Verhinderung der Kristallisation der Wirkstoffe der Formeln (II) und/oder (III) verwenden lassen.

Es ist als äußerst überraschend zu bezeichnen, daß die Kristallisationsneigung von 1-(4-Chlorphenyl)-4,4-dimethyl-3-(1,2,4-triazol-1-yl-methyl)-pentan-3-ol und 1-(4-Chlorphenoxy)-3,3-dimethyl-1-(1,2,4-triazol-1-yl)-butan-2-ol durch die erfindungsgemäße Verwendung von N-Alkyl-lactamen der Formel (I) stark herabgesetzt wird. Vor allem war nicht zu erwarten, daß N-Alkyl-lactame der Formel (I) wesentlich besser als andere vergleichbar wirkende Stoffe für den angegebenen Zweck geeignet sind.

Die Verwendung von N-Alkyl-lactamen der Formel (I) in wäßrigen Formulierungen auf Basis der fungiziden Wirkstoffe der Formeln (II) und/oder (III) weist eine Reihe von Vorteilen auf. So handelt es sich bei den N-Alkyl-lactamen der Formel (I) um Stoffe, die problemlos zu handhaben und auch in größeren Mengen verfügbar sind. Ferner wird durch den Einsatz der Stoffe der Formel (I) verhindert, daß beim Versprühen von wäßrigen Formulierungen, die Wirkstoffe der Formeln (II) und/oder (III) enthalten, sowohl die Filter als auch die Düsen der Spritzgeräte verstopfen. Vorteilhaft ist auch, daß N-Alkyl-lactame der Formel (I) im Pflanzenschutz keinerlei unerwünschte Nebenwirkungen ausüben.

Die erfindungsgemäß verwendbaren N-Alkyl-lactame sind durch die Formel (I) allgemein definiert. Vorzugsweise verwendbar sind diejenigen Stoffe der Formel (I), in denen

R für Alkyl mit 8 bis 14 Kohlenstoffatomen steht und

n für die Zahlen 3, 4 oder 5 steht.

Besonders bevorzugt verwendbar sind diejenigen Stoffe der Formel (I), in denen

R für Alkyl mit 8, 10 oder 12 Kohlenstoffatomen steht und

n für die Zahlen 3, 4 oder 5 steht.

Als Beispiele für N-Alkyl-lactame der Formel (I) seien genannt:

N-Dodecyl-caprolactam
N-Decyl-caprolactam
N-Octyl-caprolactam
N-Dodecyl-pyrrolidon
N-Decyl-pyrrolidon
N-Octyl-pyrrolidon
N-Dodecyl-valerolactam
N-Decyl-valerolactam
N-Octyl-valerolactam.

Die N-Alkyl-lactame der Formel (I) sind bereits bekannt (vgl. J. Org.Chem. 18, 1087 (1953); Ann. Chem. 596, 203 (1955); J Amer. Chem. Soc. 69, 715 (1947); DE-AS 1 160 268; EP-OS 0 077 078 und WO 88/00 184).

Die Wirkstoffe der Formeln (II) und (III) sowie deren Verwendung zur Bekämpfung phytopathogener Pilze sind ebenfalls bekannt (vgl. EP-OS 0 040 345 und DE-PS 2 324 010). Dabei lassen sich die Wirkstoffe in üblichen Formulierungen einsetzen. Vorzugsweise erfolgt die Ausbringung in Form von wäßrigen Spritzbrühen.

In den erfindungsgemäß verwendbaren Spritzbrühen können neben den Wirkstoffen der Formeln (II) und (III) auch einer oder mehrere weitere Wirkstoffe enthalten sein. Vorzugsweise in Frage kommen dabei Verbindungen mit fungiziden Eigenschaften. Als Beispiele für derartige zusätzlich verwendbare Wirkstoffe seien genannt:

1-(4-Chlorphenoxy)-3,3-dimethyl-(1,2,4-triazol-yl)-butan-2-on (Triadimefon),
1-(4-Phenyl-phenoxy)-3,3-dimethyl-(1,2,4-triazol-1-yl)-butan-2-ol(Bitertanol),
N,N-Dimethyl-N′-phenyl-(N′-fluordichlormethylthio)-sulfamid (Dichlofluanid),
N,N-Dimethyl-(N′-fluordichlormethylthio)-N′-(4-methyl-phenyl)-sulfamid (Tolylfluanid),
N-Trichlormethylmercapto-4-cyclohexen-1,2-dicarboxamid (Captan),
N-(1,1,2,2-Tetrachlorethyl-sulfenyl)-cis-4-cyclohexen-1,2-dicarboxamid (Captafol),
N-Trichlormethylthio-phthalimid (Folpet),
N-Dodecyl-guanidin-acetat (Dodine),
Tetrachlor-isophthalo-dinitril (Chlorothalonil),
4,5,6,7-Tetrachlorphthalid,
Zink-ethylen-bis-dithiocarbamat (Zineb),
Mangan-ethylen-bis-dithiocarbamat (Maneb),
Zink-ethylen-bis-dithiocarbamat/Mangan-ethylen-bis-dithiocarbamat (Mancozeb),
Zink-propylen-1,2-bis-dithiocarbamat (Propineb),
1-[3-(4-(1,1-Dimethylethyl)-phenyl)-2-methylpropyl]-piperidin (Fenpropidin),
N-Tridecyl-2,6-dimethyl-morpholin (Tridemorph),
2-[2-(2,4-Dichlorphenyl)-2-(2-propenyloxy)-ethyl]-imidazol (Imazalil),
N-[2-(2,4,6-Trichlorphenoxy)-ethyl]-N-propyl-1H-imidazol (Prochloraz),

1,2-Dimethyl-cyclopropan-1,2-dicarbonsäure-3,5-dichlorphenylimid (Procymidone),
2-Methoxycarbamoyl-benzimidazol (Carbendazim),
1-(Butylcarbamoyl)-2-benzimidazolmethylcarbamat (Benomyl),
2,4-Dichlor-6-(2'-chlorphenyl-amino)-1,3,4-triazin (Anilazine),
Bis-(8-Guanidin-O-octyl)-amin-triacetat (Guazatine),
1-(4-Chlorbenzyl)-1-cyclopentyl-3-phenyl-harnstoff (Pencyron).

Als Zusatzstoffe, die in den erfindungsgemäß verwendbaren Spritzbrühen vorhanden sein können, kommen oberflächenaktive Stoffe, organische Verdünnungsmittel, Kältestabilisatoren und Haftmittel in Frage.

Dabei kommen als oberflächenaktive Stoffe nichtionogene und anionische Emulgatoren, wie Polyoxyethylen-Fettsäure-Ester, Polyoxyethylen-Fettalkohol-Ether, Alkylaryl-polyglykol-Ether, Alkylsulfonate, Alkylsulfate und Arylsulfonate in Betracht. Dabei können die Emulgatoren einzeln oder auch in Mischung vorliegen. Vorzugsweise genannt seien

Polyoxyethylen-Sorbitan-Monolaurat mit durchschnittlich 20 Oxyethylen-Einheiten pro Molekül,
Polyoxyethylen-Sorbitan-Monopalmitat mit durchschnittlich 20 Oxyethylen-Einheiten pro Molekül,
Polyoxyethylen-Sorbitan-Monostearat mit durchschnittlich 20 Oxyethylen-Einheiten pro Molekül,
Sorbitan-Monolaurat,
Sorbitan-Monopalmitat,
Sorbitan-Monostearat,
Polyoxyethylen-oleylether mit durchschnittlich 10 Oxyethylen-Einheiten pro Molekül,
Polyoxyethylen-oleylether mit durchschnittlich 20 Oxyethylen-Einheiten pro Molekül,
Bis-[α-methyl-(4-methyl-benzyl)]-phenyl-polyglykolether mit durchschnittlich 27 Oxyethylen-Einheiten pro Molekül,
Bis-[α-methyl-(4-n-dodecyl)]-phenyl-polyglykolether mit durchschnittlich 27 Oxyethylen-Einheiten pro Molekül,
Bis-(4-methyl-Benzyl)-phenyl-polyglykolether mit durch schnittlich 27 Oxyethylen-Einheiten pro Molekül,
Bis-(4-n-dodecyl-benzyl)-phenyl-polyglykolether mit durchschnittlich 27 Oxyethylen-Einheiten pro Molekül,
Tris-[α-methyl-(4-methyl-benzyl)]-phenyl-polyglykolether mit durchschnittlich 17 Oxyethylen-Einheiten pro Molekül,
Nonylphenol-polyglykolether mit durchschnittlich 15 Oxyethylen-Einheiten pro Molekül,
Nonylphenol-diglykolether mit durchschnittlich 2 Oxyethylen-Einheiten pro Molekül,
n-Dodecyl-Natriumsulfonat,
Natrium-laurylsulfat,
4-(n-Nonyl)-phenyl-sulfonsäure-Natriumsalz,
4-(Tetrapropylen)-phenyl-sulfonsäure-Natriumsalz,
4-(i-Dodecyl)-phenyl-sulfonsäure-Ammoniumsalz,
4-(i-Dodecyl)-phenyl-sulfonsäure-Calciumsalz,
4-(n-Dodecyl)-phenyl-sulfonsäure-(2-hydroxyethyl)-ammoniumsalz,
4-(n-Dodecyl)-phenyl-sulfonsäure-bis-(2-hydroxyethyl)-ammoniumsalz,
4-(n-Dodecyl)-phenyl-sulfonsäure-tris-(2-hydroxyethyl)-ammoniumsalz,
4-(n-Dodecyl)-phenyl-sulfonsäure-Calciumsalz.

Die in der Praxis verwendeten Emulgatoren aus der Gruppe der Alkylaryl-polyglykol-Ether sind im allgemeinen Gemische aus mehreren Verbindungen. Insbesondere handelt es sich hierbei um Gemische aus Stoffen, die sich durch den Substitutionsgrad an dem mit der Oxyethylen-Einheit verbundenen Phenylring und die Zahl der Oxyethylen-Einheiten unterscheiden. Dadurch errechnen sich für die Zahl der Substituenten am Phenylring auch gebrochene Zahlen als Mittelwerte. Beispielsweise erwähnt seien Substanzen, für die sich folgende durchschnittliche Zusammensetzungen ergeben:

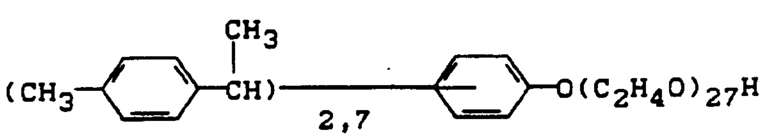

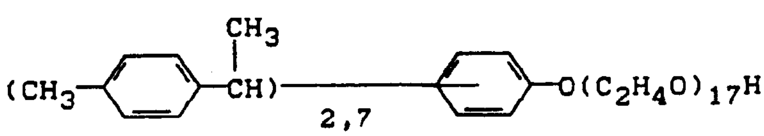

Als organische Verdünnungsmittel können in den erfindungsgemäß verwendbaren Spritzbrühen alle üblicherweise für derartige Zwecke einsetzbaren polaren und unpolaren organischen Solventien vorhanden sein. Vorzugsweise in Betracht kommen Ketone, wie Methylisobutyl-keton und Cyclohexanon, ferner Amide, wie Dimethylformamid, weiterhin cyclische Verbindungen, wie N-Methyl-pyrrolidon und Butyrolacton, darüberhinaus stark polare Solventien, wie Dimethylsulfoxid, ferner aromatische Kohlenwasserstoffe, wie Xylol, außerdem Ester, wie Propylenglykol-monomethylether-acetat, Adipinsäure-dibutylester, Essigsäurehexylester, Essigsäureheptylester, Zitronensäure-tri-n-butylester und Phthalsäure-di-n-butylester, und weiterhin Alkohole, wie Ethanol, n- und i-Propanol, n- und i-Butanol, n- und i-Amylalkohol, Benzylalkohol und 1-Methoxy-2-propanol.

Als Kältestabilisatoren können in den erfindungsgemäß verwendbaren Spritzbrühen alle üblicherweise für diesen Zweck geeigneten Stoffe enthalten sein. Vorzugsweise in Frage kommen Harnstoff, Glycerin und Propylenglykol.

Als Haftmittel können in den erfindungsgemäß verwendbaren Spritzbrühen alle üblicherweise für diesen Zweck geeigneten Stoffe eingesetzt werden. Vorzugsweise in Betracht kommen Haftmittel wie Carboxymethylcellulose, natürliche und synthetische pulverige, körnige oder latexförmige Polymere, wie Gummi arabicum, Polyvinylalkohol, Polyvinylacetat, sowie natürliche Phospholipide, wie Kephaline und Lecithine, und auch synthetische Phospholipide. Weitere Additive können mineralische und vegetabile Öle sein.

Im übrigen ist in den erfindungsgemäß verwendbaren Spritzbrühen jeweils Wasser enthalten.

Bei der erfindungsgemäßen Verwendung von N-Alkyllactamen der Formel (I) können eines oder auch mehrere dieser N-Alkyl-lactame in den Spritzbrühen eingesetzt werden.

Die Wirkstoffkonzentrationen können in den erfindungsgemäß verwendbaren Spritzbrühen innerhalb eines bestimmten Bereiches variiert werden. Im allgemeinen liegen die Wirkstoffkonzentrationen zwischen 0,0001 und 3 Gewichtsprozent, vorzugsweise zwischen 0,001 und 2-Gewichtsprozent.

Auch das Verhältnis von Wirkstoff zu N-Alkyl-lactam der Formel (I) kann innerhalb eines bestimmten Bereiches variiert werden. Im allgemeinen liegt das Gewichtsverhältnis von Wirkstoff aus der Gruppe (A) zu N-Alkyllactam der Formel (I) zwischen 1:0,2 und 1:5, vorzugsweise zwischen 1:0,6 und 1:2.

Die Mengen an weiteren Wirkstoffen bzw. Zusatzstoffen können in den erfindungsgemäß verwendbaren Spritzbrühen innerhalb eines größeren Bereiches variiert werden. Sie liegen in der Größenordnung wie es üblicherweise in derartigen wäßrigen Spritzbrühen der Fall ist.

Die Herstellung der erfindungsgemäß verwendbaren Spritzbrühen erfolgt nach üblichen Methoden. Im allgemeinen geht man so vor, daß man zunächst ein Konzentrat herstellt, indem man bei Temperaturen zwischen 15 und 30°C die benötigten Komponenten in beliebiger Reihenfolge zusammengibt und homogen vermischt und das entstehende Gemisch gegebenenfalls filtriert. Zur Herstellung der anwendungsfertigen Spritzbrühen wird die konzentrierte Formulierung gegebenenfalls unter Rühren und/oder Pumpen mit der jeweils gewünschten Menge an Wasser so vermischt, daß die Formulierung in Wasser gleichmäßig und feindispers verteilt wird.

Es ist auch möglich, eines oder mehere N-Alkyl-lactame der Formel (I) dann hinzuzugeben, wenn das Konzentrat mit Wasser zur anwendungsfertigen Spritzbrühe verdünnt wird.

Sowohl zur Zubereitung der konzentrierten Formulierungen als auch zur Herstellung und Ausbringung der erfindungsgemäß verwendbaren Spritzbrühen lassen sich alle üblicherweise für diese Zwecke geeigneten Mischapparate und Spritzgeräte einsetzen.

Durch die Verwendung von einem oder mehreren N-Alkyllactamen der Formel (I) in wäßrigen Spritzbrühen auf Basis von Wirkstoffen der Formeln (II) und/oder (III) wird die Auskristallisation von Wirkstoff sowohl in der konzentrierten, handelsüblichen Formulierung als auch beim Ausbringen der daraus hergestellten wäßrigen Spritzbrühen in den Filtern und Austrittsöffnungen der Spritzgeräte entweder ganz unterbunden oder soweit verhindert, daß die Ausbringung der Spritzbrühen nicht beeinträchtigt ist.

Die Herstellung und das Kristallisationsverhalten der erfindungsgemäß verwendbaren Spritzbrühen werden durch die folgenden Beispiele veranschaulicht.

Herstellungsbeispiele

Beispiel 1

Zur Herstellung einer Formulierung werden

12,5 Gew.-Teile 1-(4-Chlorphenyl)-4,4-dimethyl-3-(1,2,4-triazol-1-yl-methyl)-pentan-3-ol der Formel

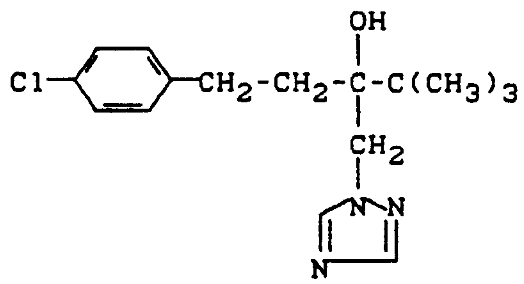
(II)

10,0 Gew.-Teile N-(n-Dodecyl)-caprolactam,
35,0 Gew.-Teile Cyclohexanon,
6,5 Gew.-Teile des Emulgators der durchschnittlichen Zusammensetzung der Formel

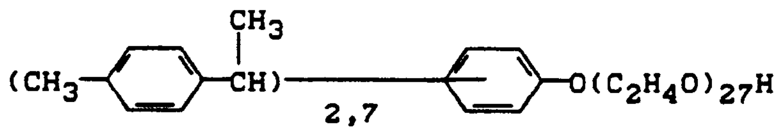

6,5 Gew.-Teile 4-(n-Dodecyl)-phenylsulfonsäure-(2-hydroxyethyl)-ammoniumsalz und
29,5 Gew.-Teile Wasser
bei Raumtemperatur vermischt und zu einer homogenen Flüssigkeit verrührt. Aus dem so erhaltenen Konzentrat wird durch Mischen mit Wasser eine Spritzbrühe hergestellt, in welcher das Konzentrat in einer Konzentration von 2 Gew.-% enthalten ist.

Beispiel 2

Zur Herstellung einer Formulierung werden
12,5 Gew.-Teile 1-(4-Chlorphenyl)-4,4-dimethyl-3-(1,2,4-triazol-1-yl-methyl)-pentan-3-ol der Formel

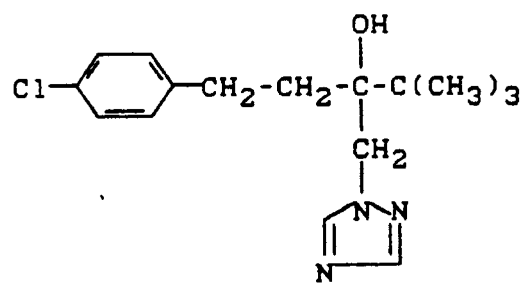
(II)

12,5 Gew.-Teile N-(n-Octyl)-pyrrolidon,
36,0 Gew.-Teile Cyclohexanon,
6,5 Gew.-Teile des Emulgators der durchschnittlichen Zusammensetzung der Formel

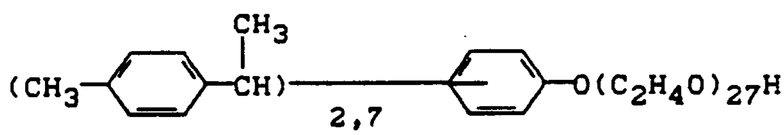

6,5 Gew.-Teile 4-(n-Dodecyl)-phenylsulfonsäure-(2-hydroxyethyl)-ammoniumsalz und
27,0 Teile Wasser
bei Raumtemperatur vermischt und zu einer homogenen Flüssigkeit verrührt. Aus dem so erhaltenen Konzentrat wird durch Mischen mit Wasser eine Spritzbrühe hergestellt, in welcher das Konzentrat in einer Konzentration von 2 Gew.-% enthalten ist.

Beispiel 3

Zur Herstellung einer Formulierung werden
12,5 Gew.-Teile 1-(4-Chlorphenyl)-4,4-dimethyl-3-(1,2,4-triazol-1-yl-methyl)-pentan-3-ol der Formel

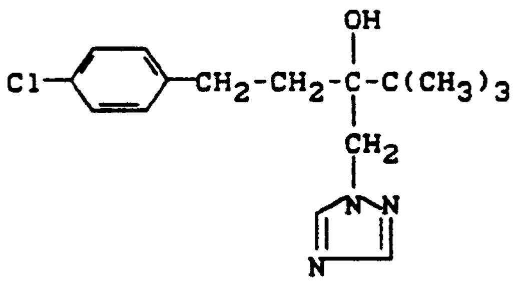
(II)

12,5 Gew.-Teile N-(n-Dodecyl)-pyrrolidon
36,0 Gew.-Teile Cyclohexanon,
6,5 Gew.-Teile des Emulgators der durchschnittlichen Zusammensetzung der Formel

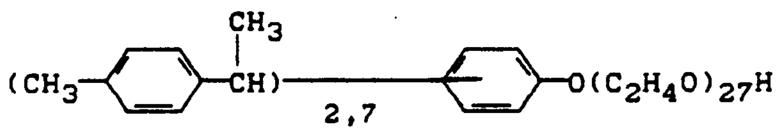

6,5 Gew.-Teile 4-(n-Dodecyl)-phenylsulfonsäure-(2-hydroxyethyl)-ammoniumsalz und
27,0 Teile Wasser
bei Raumtemperatur vermischt und zu einer homogenen Flüssigkeit verrührt. Aus dem so erhaltenen Konzentrat wird durch Mischen mit Wasser eine Spritzbrühe hergestellt, in welcher das Konzentrat in einer Konzentration von 2 Gew.-% enthalten ist.

Vergleichsbeispiel A

Zur Herstellung einer Formulierung werden
12,5 Gew.-Teile 1-(4-Chlorphenyl)-4,4-dimethyl-3-(1,2,4-triazol-1-yl-methyl)-pentan-3-ol der Formel

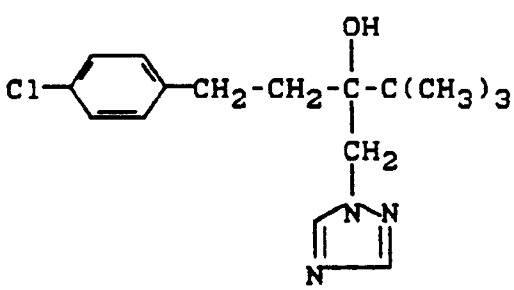
(II)

6,5 Gew.-Teile des Emulgators der durchschnittlichen Zusammensetzung der Formel

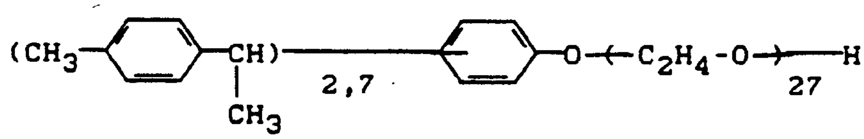

6,5 Gew.-Teile 4-(n-Dodecyl)-phenylsulfonsäure-(2-hydroxyethyl )-ammoniumsalz,
35,0 Gew.-Teile Cyclohexanon und
39,5 Gew.-Teile Wasser
bei Raumtemperatur vermischt und zu einer homogenen Flüssigkeit verrührt. Aus dem so erhaltenen Konzentrat wird durch Mischen mit Wasser eine Spritzbrühe hergestellt, in welcher das Konzentrat in einer Konzentration von 2 Gew.-% enthalten ist.

Verwendungsbeispiel I

Zur Prüfung der Kristallisationseigenschaften werden jeweils 250 ml einer wäßrigen Spritzbrühe, die einen Konzentratgehalt von 2 Gew.-% aufweisen, in einer Durchflußapparatur mit Hilfe einer Pumpe 15 Minuten lang durch ein feinmaschiges Sieb umgepumpt. Nach achtmaliger Wiederholung dieses Vorganges mit jeweils 250 ml frisch eingesetzter Spritzbrühe wird die Kristallabscheidung an dem Sieb photographiert.

Die entsprechenden Photographien sind in den Abbildungen 1 bis 4 (Fig. 1 bis 4) wiedergegeben.

Fig. 1 zeigt in 25-facher Vergrößerung die Kristallabscheidung, die beim Durchpumpen von acht 250 ml Ansätzen der Spritzbrühe gemäß Beispiel (A) am Sieb entsteht.

Fig. 2 zeigt in 25-facher Vergrößerung die Kristallabscheidung, die beim Durchpumpen von acht 250 ml Ansätzen der Spritzbrühe gemäß Beispiel (1) am Sieb entsteht.

Fig. 3 zeigt in 25-facher Vergrößerung die Kristallabscheidung, die beim Durchpumpen von acht 250 ml Ansätzen der Spritzbrühe gemäß Beispiel (2) am Sieb entsteht.

Fig. 4 zeigt in 25-facher Vergrößerung die Kristallabscheidung, die beim Durchpumpen von acht 250 ml Ansätzen der Spritzbrühe gemäß Beispiel (3) am Sieb entsteht.

Aus den Abbildungen ist erkennbar, daß das Sieb im Falle der bekannten Spritzbrühe gemäß Beispiel (A) teilweise verstopft, während im Falle der Spritzbrühen gemäß Beispielen (1) bis (3) keine Kristallabscheidung beobachtet wird.

**Patentansprüche**

1. Verwendung von N-Alkyl-lactamen der Formel

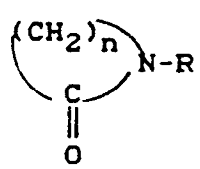
. (I)

in welcher
R für Alkyl mit 8 bis 18 Kohlenstoffatomen steht und
n für die Zahlen 3, 4 oder 5 steht,
beim Ausbringen von wäßrigen Spritzbrühen die

A) 1-(4-Chlorphenyl)-4,4-dimethyl-3-(1,2,4-triazol-1-yl-methyl)-pentan-3-ol der Formel

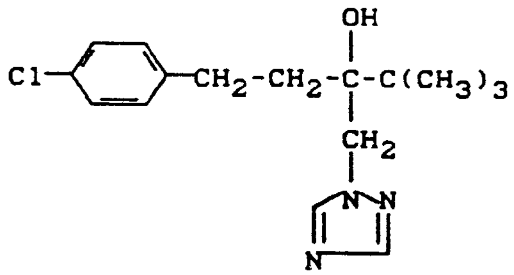 (II)

und/oder
1-(4-Chlorphenoxy)-3,3-dimethyl-1-(1,2,4-triazol-1-yl)-butan-2-ol der Formel

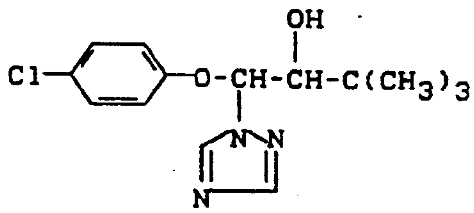 (III)

und
B) gegebenenfalls einen oder mehere weitere Wirkstoffe mit fungiziden Eigenschaften sowie Zusatzstoffe aus den Gruppen der obeflächenaktiven Stoffe, organischen Verdünnungsmittel, Kältestabilisatoren und Haftmittel
enthalten,
zur Verhinderung der Kristallisation der Wirkstoffe der Formeln (II) und/oder (III).

2. Verwendung gemäß Anspruch 1, dadurch gekennzeichnet, daß man N-(n-Dodecyl)-caprolactam einsetzt.

3. Verwendung gemäß Anspruch 1, dadurch gekennzeichnet, daß man N-(n-Octyl)-pyrrolidon einsetzt.

4. Verwendung gemäß Anspruch 1, dadurch gekennzeichnet, daß man N-(n-Dodecyl)-pyrrolidon einsetzt.

5. Verwendung gemäß Anspruch 1, dadurch gekennzeichne, daß man ein Gemisch aus N-(n-Octyl)-pyrrolidon und N-(n-Dodecyl)-pyrrolidon einsetzt.

6. Verfahren zur Verhinderung der Kristallisation von Wirkstoffen der Formeln (II) und/oder (III) gemäß Anspruch 1 beim Ausbringen von wäßrigen Spritzbrühen, die Wirkstoffe der Formeln (II) und/oder (III) enthalten, dadurch gekennzeichnet, daß man den Spritzbrühen mindestens ein N-Alkyl-lactam der Formel (I) gemäß Anspruch 1 zusetzt.

## Claims

1. Use of N-alkyl-lactams of the formula

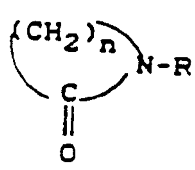 (I)

in which
R represents alkyl having 8 to 18 carbon atoms and
n represents the number 3, 4 or 5,
during application of aqueous spray liquors containing

A) 1-(4-chlorophenyl)-4,4-dimethyl-3-(1,2,4-triazol-1-yl-methyl)-pentan-3-ol of the formula

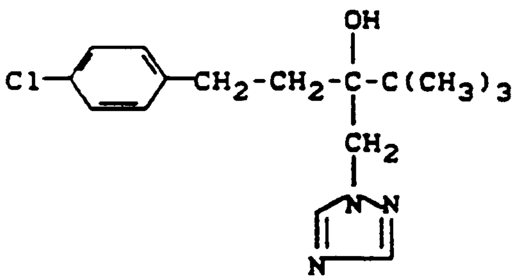

(II)

and/or
1-(4-chlorophenoxy)-3,3-dimethyl-1-(1,2,4-triazol-1-yl)-butan-2-ol of the formula

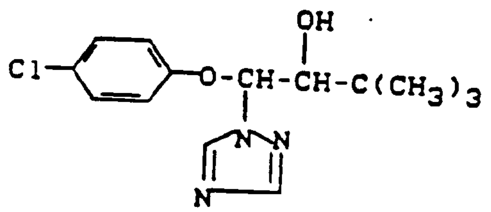

(III)

and
B) if appropriate one or more other active compounds with fungicidal properties and additives from the groups consisting of surface-active substances, organic diluents, low temperature stabilizers and adhesives,
for preventing crystallization of the active compounds of the formulae (II) and/or (III).

2. Use according to Claim 1, characterized in that N-(n-dodecyl)-caprolactam is employed.

3. Use according to Claim 1, characterized in that N-(n-octyl)-pyrrolidone is employed.

4. Use according to Claim 1, characterized in that N-(n-dodecyl)-pyrrolidone is employed.

5. Use according to Claim 1, characterized in that a mixture of N-(n-octyl)-pyrrolidone and N-(n-dodecyl)-pyrrolidone is employed.

6. Process for preventing crystallization of active compounds of the formulae (II) and/or (II) according to Claim 1 during application of aqueous spray liquors containing active compounds of the formulae (II) and/or (III), characterized in that at least one N-alkyl-lactam of the formula (I) according to Claim 1 is added to the spray liquors.

## Revendications

1. Utilisation de N-alkyllactames de formule

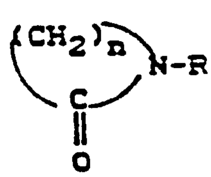

. (I)

dans laquelle
R signifie alkyle avec 8 à 18 atomes de carbone, et
n représente le nombre 3, 4 ou 5,
dans l'application de formulations pulvérisables aqueuses contenant
A) du 1-(4-chlorophényl)-4,4-diméthyl-3-(1,2,4-triazol-1-yl-méthyl)-pentane-3-ol de formule

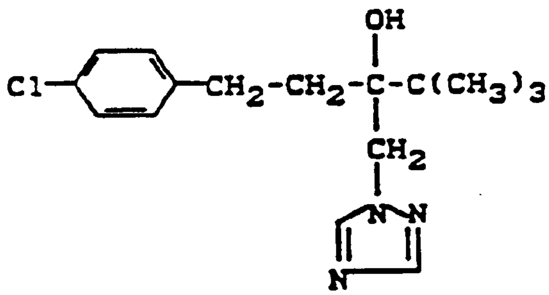

(II)

et/ou

du 1-(4-chlorophénoxy)-3,3-diméthyl-1-(1,2,4-triazol-1-yl)-butane-2-ol de formule

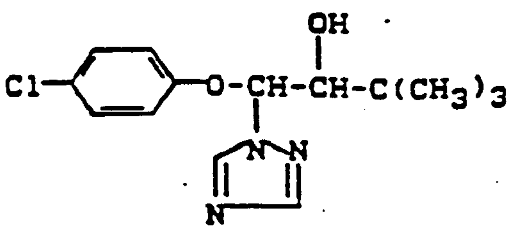

(III)

et

B) éventuellement une ou plusieurs autres substances actives, ainsi que des additifs du groupe des agents tensioactifs, diluants organiques, stabilisateurs à froid et adhésifs,

pour empêcher la cristallisation des substances actives de formule (II) et/ou (III).

2. Utilisation selon la revendication 1, caractérisée en ce que l'on emploie du N-(n-dodécyl)-caprolactame.

3. Utilisation selon la revendication 1, caractérisée en ce que l'on emploie de la N-(n-octyl)-pyrrolidone.

4. Utilisation selon la revendication 1, caractérisée en ce que l'on emploie de la N-(n-dodécyl)-pyrrolidone.

5. Utilisation selon la revendication 1, caractérisée en ce qu'on emploie un mélange de N-(n-octyl)-pyrrolidone et de N-(n-dodécyl)-pyrrolidone.

6. Procédé pour empêcher la cristallisation de substances actives de formules (II) et/ou (III) selon la revendication 1 lors de l'application de formulations pulvérisables aqueuses contenant des substances actives de formules (II) et/ou (III), caractérisé en ce que l'on ajoute aux formulations pulvérisables au moins un N-alkyllactame de formule (I) selon la revendication 1.

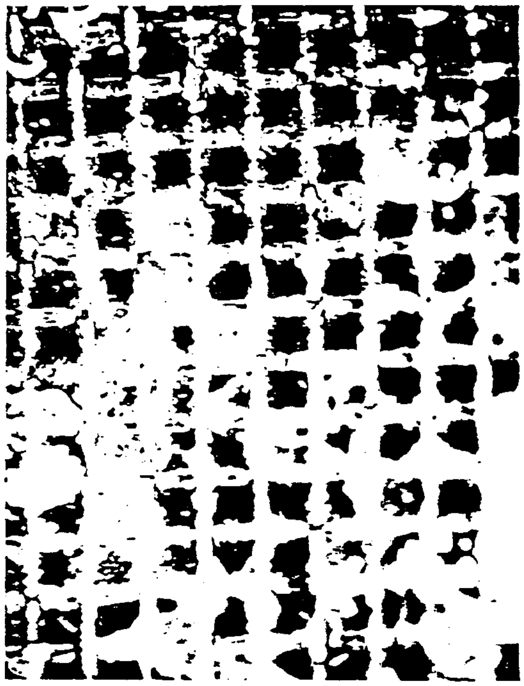

FIG.1

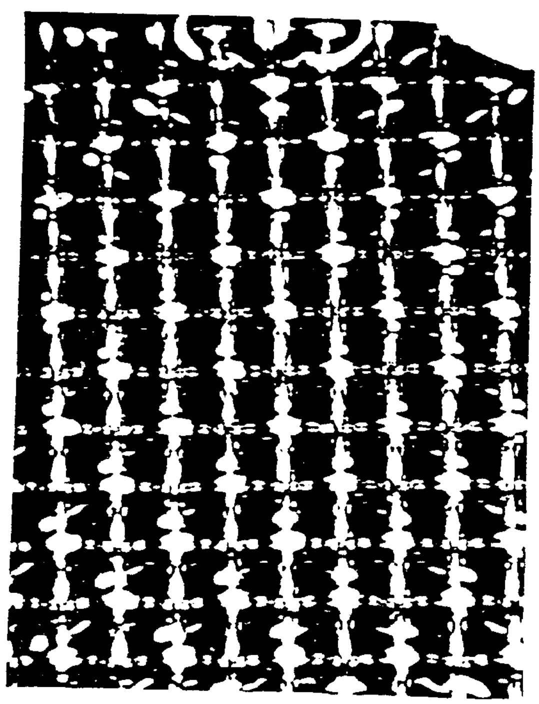

FIG.2

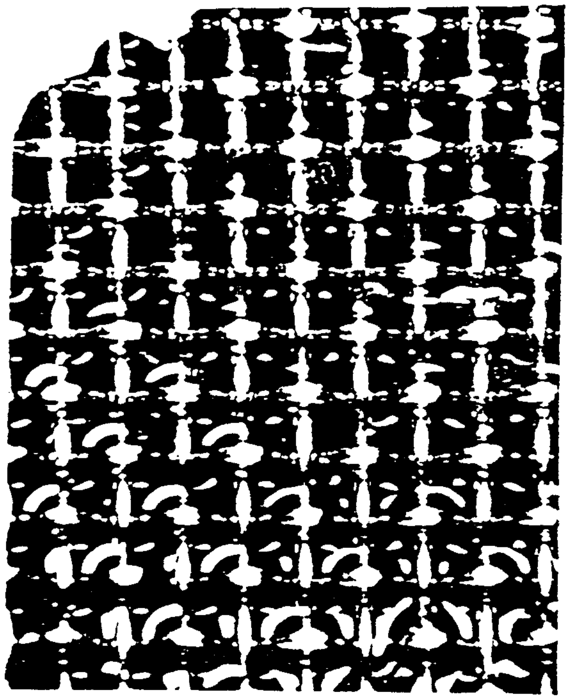

FIG. 3

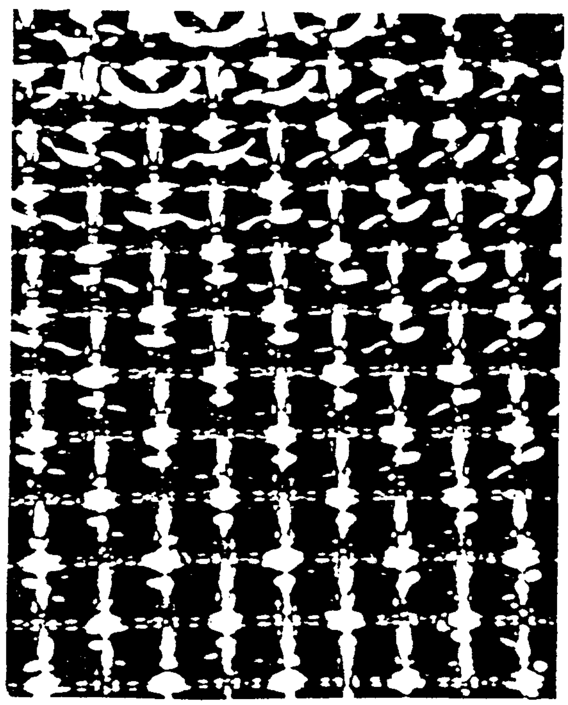

FIG. 4